# EUROPEAN PATENT SPECIFICATION

(11) **EP 2 165 976 B1**
(45) Date of publication and mention of the grant of the patent: **29.11.2017**
(21) Application number: 07788702.4
(22) Date of filing: 02.07.2007
(51) Int. Cl.: C01G 49/14, C04B 22/14, C05D 9/02, C09C 1/22, C04B 40/00, C04B 111/10

(54) **METHOD OF COMPACTATION OF COMPOSITIONS BASED ON FERROUS SULPHATE HEPTAHYDRATE AND PRODUCT OBTAINED THEREFROM**
VERFAHREN ZUM KOMPAKTIEREN VON ZUSAMMENSETZUNGEN AUF BASIS VON EISEN(II)-SULFATHEPTAHYDRAT UND DARAUS ERHALTENES PRODUKT
PROCEDE DE COMPACTAGE DE COMPOSITIONS A BASE DE SULFATE FERREUX HEPTAHYDRATE ET PRODUIT AINSI OBTENU

(43) Date of publication of application: 24.03.2010
(73) Proprietor: Fertinagro Nutrientes, S.L., 44195 Teruel (ES)
(72) Inventor: ATARES REAL, Sergio, E-44195 Teruel (ES)
(74) Representative: Mato Adrover, Ángel Luis
(86) International application number: PCT/ES2007/070126
(87) International publication number: WO 2009/004101

(56) References cited:
- EP-A- 0 662 452
- EP-A- 1 440 954
- EP-A- 1 544 182
- WO-A-84/01942
- WO-A-2008/000855
- US-A- 4 659 557
- US-A1- 2007 119 222
- US-B1- 6 372 008

## Description

### OBJECT OF THE INVENTION

The present invention relates to a confined pressure compaction procedure for sulphate ferrous heptahydrate-based compositions, a compacted product thus obtained and a confined pressure compaction plant.

The compacted product obtained by the procedure of the invention is preferably indicated for:
- Reducing the Cr (VI) content of iron sulphate heptahydrate-based cement,
- Eliminating iron sulphate deficiencies in agricultural land and crops.

### BACKGROUND OF THE INVENTION

The use of ferrous sulphate heptahydrate is known as a reducing agent. Its reducing properties are due to the presence of the iron II ion that becomes iron III by means of a spontaneous process that is favoured by different factors. The speed of oxidation increases with pH, temperature and light.

With the implementation of Ministerial Order PRE/1954/2004 of 22 June 2004, the transposition of Directive 2003/53/EC, since January 2005 it has been compulsory to use a hexavalent chromium reducing agent in cements.

At present one of the main sources of ferrous sulphate used comes from by-products generated during the production of titanium dioxide from ilmenite.

There is a great deal of interest in the use of this type of by-products, as their cost is low and they are produced in large quantities. But the problem with these by-products is that their physical appearance is very poor because they are products that contain considerable amounts of free acidity and humidity.

Free acidity is necessary to preserve their state of iron II oxidation, but it makes their handling, storage and dosage processes more difficult.

The presence of free sulphuric acid therefore serves to prevent oxidation but gives it hazardous handling and storage properties.

Another problem with ferrous sulphate heptahydrate is that it is an efflorescent substance. As it is a product with seven hydration water molecules, when it dehydrates it carries salt in this evaporated water, leaving salt deposits on different surfaces.

Different methods of compaction are used to solve this problem.

There are several known processes and units for the compaction of solids using pressure.

Among them extrusion stands out, which is defined as the action of shaping or moulding a mass or solid by forcing it through an opening, normally a hole or a matrix with various specially arranged holes.

In these extrusion methods, as in the case of pelletising, it is necessary for the material fed into the extruding machine to have a sufficient plastic phase, which results from humidity present in the material, or from an induced deformation, e.g. by heating the material.

US 6,372,008, for instance, discloses a process for the production of granules based on ferrous sulphate heptahydrate and zinc sulphate heptahydrate. The process comprises combining these raw materials with a binder and feeding them to a granulator. After granulation, the product is conditioned by moderate heating and optional subsequent curing and cooling to increase the hardness of the product.

US 4,659,557 discloses a process for making ferrous sulphate in granule form by mixing ferrous sulphate heptahydrate with an agent capable of absorbing a substantial amount of moisture, such as fine-grain brown coal or lignite having a low water content.

The use of iron in agriculture is also known, to prevent deficiencies in land and crops.

The main difference between known extrusion methods and the confined pressure methods described herein is that in the case of confined pressure methods, the material that is fed in does not need to have plastic characteristics.

### DESCRIPTION OF THE INVENTION

The problem solved by the present invention is to obtain a method of producing an iron sulphate heptahydrate-based reducing agent that retains its reducing properties for longer whilst optimising the transport, handling, storage and dosage operations of these materials.

Due to their compact form it is not necessary to transport leachates. Also, they retain their acid properties for longer than non-compacted reducing agents, because the process of improving the physical properties does not neutralise or dry the ferrous sulphate heptahydrate.

Furthermore, it is easier to store, as it reduces the oxidation and leaching surface of the product. It is also possible to include an additive to its composition to improve the stability of this compound.

Therefore, by producing a reducing additive compacted by confined pressure using the procedure of the invention it is possible to eliminate the problems of emitting dust particles into the atmosphere, therefore causing fewer environmental problems and hazards for people's safety.

With the product obtained by this compaction of the invention there are fewer possibilities of caking, oxidation and spontaneous efflorescence. It provides a substantial improvement to the solids flow characteristics. The product's density is increased twofold and therefore the space needed for storage is reduced.

This invention uses confined pressure compaction, which provides a number of advantages over compaction by extrusion.

Firstly, by using the procedure of the present invention it is possible to achieve a method with a lower production cost as it does not use the consumable materials of an extrusion method, such as matrices and rollers that provide the necessary pressure from friction on passing through the holes, which are not hard-wearing. In the case of confined pressure compaction all wear is confined to the casing of the ribbed rollers, meaning that there is much less material in contact with friction.

Moreover, it is a method that involves a much lower economic cost. The investment required per ton of product is much smaller, as the roller-type compactors that are used in confined pressure compaction are mechanically simpler and easier to operate.

Additionally, with confined pressure compaction it is possible to increase the efficiency of the operation; confined pressure machines existing on the market offer a higher production per kilowatt/hour consumed by the electric motor under the same conditions. In this case it is not necessary to rotate the entire matrix, but just two rollers that weigh much less.

Lastly, the particles obtained are of a greater density and larger size, avoiding problems of dust and thus reducing the possibilities of caking, oxidation and efflorescence.

One aspect of the invention discloses a confined pressure compaction procedure for ferrous sulphate heptahydrate-based compositions.

The first step to achieve good confined pressure compaction is to try to eliminate the plastic deformation of solids in the case of ferrous sulphate heptahydrate.

To do this it is necessary to try to provide the mixture with rigidity and try to avoid humidity, which is the main reason why this plastic phase occurs.

This can be achieved using chemical drying agents, which are substances that can capture humidity and fix it in their structure, whether chemically, such as hydration water in its crystalline structure, or by adsorption or capillarity phenomena, in its porous structure.

This effect can be achieved using the product of the reaction between sulphuric acid and dolomite, forming a double calcium magnesium sulphate, which can capture hydration water and thus eliminate free humidity from the mixture.

It is also possible to use other types of materials that fulfil the same functions such as clay with a high lignite content, to use it as an agglutinating structure and as a binder, although it is possible to use any amount of other substances with similar characteristics, e.g. all kinds of clays, sands, ashes, steatites, gypsums, etc.

If we use a calcium magnesium sulphate as a drying agent to achieve a stable compaction, the ferrous sulphate heptahydrate and the compound for capturing water are mixed for a certain length of time and after this time it is possible to observe a manageable solid phase thanks to the hydration of the salts in the formulation. The presence of magnesium and calcium sulphate in the formulation favour the hydration speed, resulting in a very solid and stable compaction without the presence of fines.

Once a homogenous mixture is achieved, it is left to react.

After this the compaction process begins by feeding the hopper of the compaction machine, the endless dosing conveyor that is connected to a PLC serving as automatic means of regulating the maximum intensity to be reached by the machine.

After compaction, the product is conditioned. It is taken to the cooler where it is subjected to an air turbine and a residence time until the temperature descends to room temperature.

After the product has acquired the correct consistency due to the cooling process, it is taken to the unit where the end product is broken down and prepared.

It is thus possible to achieve a very hard product and the edges look rounded due to the polishing drum used.

The present invention therefore relates to a confined pressure compaction procedure for ferrous sulphate heptahydrate-based compositions that consists of at least the following steps:
a) supplying a mass of ferrous sulphate heptahydrate.
b) reducing the plastic phase of the ferrous sulphate heptahydrate by adding an additive with drying properties. In this step, the ferrous sulphate heptahydrate is in a composition of 50-99% with between 0-10% of the drying additive.
c) confined pressure compacting.
d) conditioning the end product.

A second aspect of the invention relates to the product obtained by the procedure described herein.

The product obtained consists of a compacted single body whose composition comprises an iron content of between 12% and 18%. Also described is a confined pressure compaction plant, which comprises at least the following elements:
- A raw material feed hopper.
- A mixing feed hopper. This is where the different solids are fed and where all the ingredients from the raw materials and the recycled fine material from the screens and the dust capturing system are homogenously mixed.
- A vibrating plate. This ensures that the compactor is dosed in a constant and homogenous manner.
- A roller compactor.
- A fixed-bed cooler refrigerated by an air current using a forced draught from a turbine.
- A centrifuge screen consisting of a perforated mesh.
- A polishing drum.
- An end product screen.

The final aspect of the invention relates to the use of the compacted product obtained. This compacted product is used as an additive to reduce the chromium content in cement and as a fertiliser for agricultural land.

### DESCRIPTION OF THE DRAWINGS

The present description also has a set of non-limiting, illustrative plans by way of an example of the preferred embodiment of the invention.

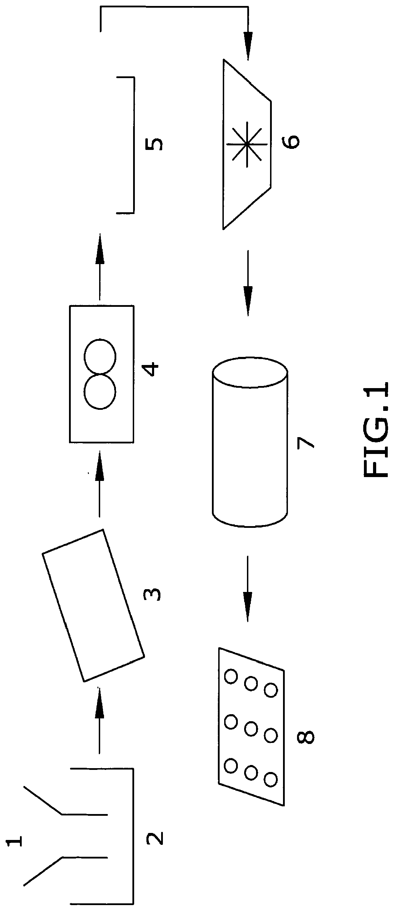

Figure 1 shows a flow diagram of a compaction plant.

### PREFERRED EMBODIMENT OF THE INVENTION

In an example the confined pressure compaction plant needed to perform the procedure of the invention is specified below.
- A raw material feed hopper (1).
- A mixing feed hopper (2) with a capacity of 20 tons per hour, with two endless conveyors with rotation inverters in the lower part, which are actuated by independent 7 kW motors.
- A feed conveyor from the mixing hopper to the compaction machine.
- A vibrating plate (3) with a capacity of 40 t/h, measuring width 500 mm and length 1250 mm.
- A roller compactor (4) with a capacity of 50 t/h. The rollers have a diameter of 1050 mm and a working width of 790 mm. The speed range of the rollers is 9-17.6 rpm. 400 hp motor.
- A compactor output conveyor, with a maximum capacity of 10 ton/h.
- A fixed-bed cooler (5) with a transverse surface of 4 m2, refrigerated by an air current using a forced draught from a 20,000 m3/hour turbine.
- An end product output conveyor.
- A crusher with a capacity of 100 t/h. Diameter 1000 mm and width 1200 mm.
- A conveyor belt.
- A centrifuge screen (6) consisting of a perforated mesh with 2 mm holes.
- A storage conveyor belt.
- A storage facility for the end product.

In order to prevent dust generation problems with the end product, the edges of the compacted pieces are removed by forced abrasion units to polish and remove the edges of the material using the following apparatus:
- Polishing drum (7) with a capacity of 35 t/h. Diameter 1600 mm and length 4000 mm. 22 hp motor.
- End product screen (8) driven by unbalanced motors, with a capacity of 35 t/h.

In an example of an embodiment, the mixing hopper (1) is supplied with ferrous sulphate heptahydrate with the following composition and origin, which comes from the production of titanium dioxide from ilmenite. In this case the composition is as follows:

| COMPONENT | TYPICAL % |
|---|---|
| FERROUS SULPHATE HEPTAHYDRATE | 97 |
| SULPHURIC ACID | 1.5 |
| MANGANESE SULPHATE | 1 |
| ZINC SULPHATE | 0.5 |

The quantity of ferrous sulphate heptahydrate added is 90% w/w. In this case 9 tons of this ferrous sulphate heptahydrate are added.

We used 5 % (500 kg) of a clay with 20% lignite content, known as mining outcrop, although it is also possible to use other types of binders such calcium as sulphates, and generally any compound that has binding and drying properties.

We used 5% of calcium magnesium sulphate, from the reaction between sulphuric acid and dolomite.

In the mixing hopper (2) the residence time to achieve a homogenous mixture is approximately 15 minutes. After this the product is left to react for about 48 hours.

After this the compaction process begins, supplying the feed hopper of the roller compaction machine (4), being subjected first to a vibrating plate (3). An endless dosing conveyor is connected to a PLC that serves as an automatic means of regulating the maximum intensity to be reached by the machine.

After compaction the product is taken to the fixed-bed cooler (5) where it is subjected to a room temperature air turbine with a capacity of approximately 20,000 m³/hr with a residence time of approximately 15 minutes until the temperature descends to room temperature.

After the product has acquired the correct consistency due to the cooling process, it is taken to the unit where the end product is broken down and then passed through a centrifuge screen (6) for preparing the end product.

It is taken by a conveyor belt to a polishing drum (7) and is then finally passed through an end product screen (8).

The result is a quadrangular prism-shaped compacted or end product measuring approximately 4 mm wide, by 2 mm high and 4 mm long.

This compacted product is very hard and the edges look rounded due to the polishing drum used.

This compacted single body has a high quantity of iron II, 16 %, which is the active element and which is stable to oxidation thanks to reducing the contact surface with air due to the composition described in Table 1. The ferrous sulphate heptahydrate comes from the production of titanium dioxide from ilmenite.

The compacted product thus obtained is used as a chromium-reducing additive in cement.

Variations in the materials, shape, size and arrangement of the components do not alter the essence of this invention, which is described in a non-limiting manner, said description being sufficient for a person skilled in the art to carry out the procedure.

## Claims

1. Confined pressure compaction procedure for ferrous sulphate heptahydrate-based compositions, **characterised in that** it consists of at least the following steps:
a) supplying a mass of ferrous sulphate heptahydrate.
b) adding an additive with drying properties capable to reduce the plastic phase of the ferrous sulphate heptahydrate by capturing hydration water.
c) confined pressure compacting using roller-type compactors wherein the rollers are ribbed rollers.
d) conditioning the end product by cooling, screening and polish.

2. Procedure according to claim 1, **characterised in that** in the plastic phase reducing step the ferrous sulphate heptahydrate is in a composition of 50-99% with up to 10% of the additive with drying properties.

3. Procedure according to claim 1, **characterised in that** the additive with drying properties is calcium magnesium sulphate.

4. Procedure according to claim 3, **characterised in that** the calcium magnesium sulphate is obtained by reacting iron sulphate heptahydrate with a sulphuric acid content, with dolomite.

5. Procedure according to claim 1, **characterised in that** the drying additive is clay with a lignite content, or calcium sulphates.

6. Procedure according to claim 1, **characterised in that** the ferrous sulphate heptahydrate is a by-product of the production of titanium dioxide from ilmenite.

7. Compacted product that can be obtained by means of any of the previous claims, **characterised in that** it consists of a single body whose composition comprises an iron content of between 12% and 18% w/w.

8. Use of the compacted product according to claim 7 as an additive for cement.

9. Use of the compacted product according to claim 7 as a fertiliser for agricultural land.

## Patentansprüche

1. Begrenztes Druckkkompaktierungsverfahren für auf Eisensulfatheptahydrat basierende Zusammensetzungen, **dadurch gekennzeichnet, dass** es aus mindestens den folgenden Schritten besteht:
a) Zuführen einer Menge von Eisensulfatheptahydrat.
b) Zugeben eines Zusatzstoffes mit Trocknungseigenschaften, der in der Lage ist, die plastische Phase des Eisensulfatheptahydrats durch Einfangen von Hydratationswasser zu reduzieren,
c) begrenztes Druckkompaktieren unter Verwendung walzenartiger Kompaktoren, wobei die Walzen geriffelte Walzen sind,
d) Konditionieren des Endprodukts durch Abkühlen, Sieben und Polieren.

2. Verfahren nach Anspruch 1, **dadurch gekennzeichnet, dass** in dem Reduktionsschritt der plastischen Phase das Eisensulfatheptahydrat in einer Zusammensetzung von 50 bis 99 % mit bis zu 10% des Zusatzstoffes mit Trocknungseigenschaften vorhanden ist.

3. Verfahren nach Anspruch 1, **dadurch gekennzeichnet**, das der Zusatzstoff mit Trocknungseigenschaften Calcium-Magnesiumsulfat ist.

4. Verfahren nach Anspruch 3, **dadurch gekennzeichnet, dass** das Calcium-Magnesiumsulfat durch Reagieren von Eisensulfatheptahydrat mit einem Schwefelsäuregehalt mit Dolomit erhalten wird.

5. Verfahren nach Anspruch 1, **dadurch gekennzeichnet, dass** der Trocknungszusatzstoff Ton mit Lignitgehalt oder Calciumsulfat ist.

6. Verfahren nach Anspruch 1, **dadurch gekennzeichnet, dass** das Eisensulfatheptahydrat ein Nebenprodukt der Herstellung von Titandioxid aus Ilmenit ist.

7. Kompaktiertes Produkt, das nach einem der vorhergehenden Ansprüche erhalten werden kann, **dadurch gekennzeichnet, dass** es aus einem einzelnen Körper besteht, dessen Zusammensetzung einen Eisengehalt von zwischen 12 Gew.-% und 18 Gew.-% umfassen kann.

8. Verwendung des kompaktierten Produkts nach Anspruch 7 als Zusatzstoff für Zement.

9. Verwendung des kompaktierten Produkts nach Anspruch 7 als Dünger für landwirtschaftliche Flächen.

## Revendications

1. Procédure de compactage par pression confinée pour les compositions à base de sulfate ferreux heptahydraté, **caractérisée en ce qu'**elle consiste en au moins les étapes suivantes :
a) fournir une masse de sulfate ferreux heptahydraté.
a) ajouter un additif avec des propriétés de séchage capable de réduire la phase plastique du sulfate ferreux heptahydraté en capturant l'eau d'hydratation.
c) compacter par pression confinée en utilisant des compacteurs du type à rouleaux dans lesquels les rouleaux sont des rouleaux à rainures.
d) conditionner le produit final en refroidissant, en filtrant et en polissant.

2. Procédure selon la revendication 1, **caractérisée en ce que** dans l'étape de réduction de la phase plastique le sulfate ferreux heptahydraté est dans une composition de 50-99 % avec jusqu'à 10 % de l'additif avec des propriétés de séchage.

3. Procédure selon la revendication 1, **caractérisée en ce que** l'additif avec des propriétés de séchage est le sulfate de magnésium et de calcium.

4. Procédure selon la revendication 3, **caractérisée en ce que** le sulfate de magnésium et de calcium est obtenu par la réaction du sulfate de fer heptahydraté avec une teneur en acide sulfurique, avec de la dolomite.

5. Procédure selon la revendication 1, **caractérisée en ce que** l'additif de séchage est de l'argile avec une teneur en lignite, ou des sulfates de calcium.

6. Procédure selon la revendication 1, **caractérisée en ce que** le sulfate ferreux heptahydraté est un sous-produit de la production de dioxyde de titane à partir d'ilménite.

7. Produit compacté qui peut être obtenu au moyen de l'une quelconque des revendications précédentes, **caractérisé en ce qu'**il consiste en un seul corps dont la composition comprend une teneur en fer comprise entre 12 % et 18 % p/p.

8. Utilisation du produit compacté selon la revendication 7 comme un additif pour le ciment.

9. Utilisation du produit compacté selon la revendication 7 comme un fertilisant pour le terrain agricole.
